# EUROPEAN PATENT APPLICATION

(11) **EP 4 851 851 A1**
(43) Date of publication of application: **09.12.2026**
(21) Application number: 24921281.2
(22) Date of filing: 21.06.2024
(51) Int. Cl.: G06K 7/14

(54) **BARCODE INFORMATION READING METHOD AND APPARATUS, AND MEDIUM AND DEVICE**

(30) Priority: 01.02.2024 CN 202410149716
(71) Applicant: Huizhou TCL Cloud Internet Corporation Technology Co., Ltd., Huizhou, Guangdong 516006 (CN)
(72) Inventor: WEI, Jiali, Huizhou, Guangdong 516006 (CN)
(74) Representative: Murgitroyd & Company
(86) International application number: PCT/CN2024/100681
(87) International publication number: WO 2025/161244

(57) **Abstract**

A barcode information reading method and apparatus, and a medium and a device. The method comprises: acquiring attribute information of a display interface, and a picture to be scanned; determining whether to perform anti-jitter processing on said picture; if so, performing the anti-jitter processing on said picture, so as to obtain a target picture which has been subjected to the anti-jitter processing; and performing a decoding operation on the target picture, so as to read barcode information. The present application can perform anti-jitter processing on a picture to be scanned, without affecting the picture quality of other non-code-scanning scenarios.

## Description

The present disclosure claims the priority of Chinese Patent Application No. 202410149716.1, entitled "Method of Reading Barcode Information, Reader, Storage Medium and Device", filed on February 1, 2024, the disclosure of which is incorporated herein by reference in its entirety.

### FIELD OF THE DISCLOSURE

The present disclosure relates to a method of reading barcode information, a reader, a storage medium and a device.

### BACKGROUND

A barcode is a graphic identifier used to express a specific set of information, consisting of a series of black bars (lines) and white spaces, representing information containing numbers, letters, or other identifiers according to specific encoding rules. There are two main types of barcodes. The most common type of barcode is the one-dimensional barcode, which encodes information along a horizontal line. Common one-dimensional barcodes include Code 39, Code 128, UPC (Universal Product Code), and EAN (International Article Number). The other type is the two-dimensional barcode, which encodes information in both horizontal and vertical directions, so it is therefore capable of storing more data.

In the current code scanning scenario, most of them first open the application software that provides the code scanning function on the electronic device, utilize the application software to invoke the camera of the electronic device itself, and then obtain a preview image through the camera, and do actions such as barcode detection, barcode decoding, etc., so as to obtain the barcode information. In the above scheme, due to the constraints of the code scanning scenario, the application software that provides the code scanning function can only realize simple image data acquisition when invoking the camera of the electronic device, and lacks the authority to invoke other image processing capabilities in the electronic device that can improve the quality of code scanning, which results in the user not being able to quickly and effectively identify the barcode and affect the reading of the barcode information when the user is holding the electronic device and there is a jittery situation in the device, thereby affecting the reading of the barcode information.

### SUMMARY

Embodiments of the present disclosure provide a method of reading barcode information, a reader, a storage medium and a device, to solve the problem that the barcode screen is blurred easily due to device shaking in current barcode information reading process through a third-party application software, affecting the reading of the barcode information.

Embodiments of the present disclosure provides a method of reading barcode information applied to an electronic device. The method includes:
displaying a display interface corresponding to a target application in response to an enabling operation of a scanning function for the target application;
obtaining attribute information of the display interface and a screen to be scanned appearing in the display interface, determining whether to perform an anti-shaking processing on the screen to be scanned according to the attribute information and obtaining a determination result;
when the determination result is yes, performing the anti-shaking processing on the screen to be scanned to obtain a target screen after anti-shaking processing; and
performing a decoding operation on the target screen by a code scanning module of the target application to read barcode information in the target screen.

In the method of reading barcode information, the attribute information comprises an application package name and an application activity name of the target application. The determining whether to perform an anti-shaking processing on the screen to be scanned according to the attribute information, comprises:
based on a target attribute group composed of the application package name and the application activity name of the target application, determining whether the target attribute group exists in a preset list, wherein the preset list is used for recording the attribute groups that conform to the anti-shaking processing;
when the target attribute group exists in the preset list, determining that the screen to be scanned needs to be subjected to anti-shaking processing.

In the method of reading barcode information, the electronic device comprises a gyroscope, and performing the anti-shaking processing on the screen to be scanned to obtain a target screen after anti-shaking processing comprises:
obtaining angular velocity data corresponding to the gyroscope when the screen to be scanned is acquired;
calculating a compensation value required for each pixel point in the screen to be scanned respectively based on the angular velocity data, the compensation value being used to counteract the effect of jittering of the screen to be scanned due to movement of an electronic device;
adjusting the position and direction of each pixel point in the screen to be scanned based on the compensation value to obtain the target screen after anti-shaking processing.

In the method of reading barcode information, the angular velocity data comprises angular velocities obtained in three dimensions. The calculating the compensation value required for each pixel point in the screen to be scanned respectively based on the angular velocity data comprises:
constructing an angular velocity vector according to the angular velocities obtained in three dimensions;
determining a time interval required for the electronic device to acquire the screen to be scanned;
performing a multiplication operation between the angular velocity vector and the time interval to obtain the compensation value required for each pixel point in the screen to be scanned.

In the method of reading barcode information, the performing the anti-shaking processing on the screen to be scanned to obtain the target screen after anti-shaking processing, comprises:
obtaining an image sequence comprising the screen to be scanned, and constructing an affine transformation matrix based on the image sequence;
adjusting the position and direction of each pixel point in the screen to be scanned through the affine transformation matrix to obtain the target screen after anti-shaking processing.

In the method of reading barcode information, the constructing the affine transformation matrix based on the image sequence comprises:
calculating feature vector containing the coordinates of the feature point in each frame of the image, and constructing an augmentation matrix based on the feature vector; estimating predetermined parameters contained in the augmentation matrix, and constructing the affine transformation matrix by the predetermined parameters.

In the method of reading barcode information, before determining whether to perform the anti-shaking processing on the screen to be scanned according to the attribute information, the method further comprises:
obtaining a target ambient brightness value when the screen to be scanned is acquired;
determining a target image exposure value corresponding to the target ambient brightness value according to a predetermined mapping relationship between the ambient brightness value and an image exposure value;
performing an exposure processing on the screen to be scanned according to the target image exposure value.

Correspondingly, embodiments of the present disclosure provide a barcode information reader. The barcode information reader includes:
an operation response module, configured to display a display interface currently corresponding to a target application in response to an enabling operation of a scanning function for the target application;
a data acquisition module, configured to obtain attribute information of the display interface and a screen to be scanned appearing in the display interface, to determine whether to perform an anti-shaking processing on the screen to be scanned according to the attribute information, and to obtain a determination result;
a screen processing module, configured to perform the anti-shaking processing on the screen to be scanned to obtain a target screen after anti-shaking processing when the determination result is yes;
an information reading module, configured to perform a decoding operation on the target screen by a code scanning module of the target application to read barcode information in the target screen.

According to another embodiment of the present disclosure, a computer-readable storage medium is provided. The computer-readable storage medium stores a plurality of instructions executable by a processor to perform the method of reading barcode information.

According to another embodiment of the present disclosure, a terminal device includes a processor and a memory. The memory stores a plurality of instructions executable by the processor to perform the method of reading barcode information.

In an embodiment of the present disclosure, embodiments of the present disclosure provide a method of reading barcode information, a reader, a storage medium and a device. The method includes: displaying a display interface corresponding to a target application in response to an enabling operation of a scanning function for the target application; obtaining attribute information of the display interface and a screen to be scanned appearing in the display interface, determining whether to perform an anti-shaking processing on the screen to be scanned according to the attribute information and obtaining a determination result; when the determination result is yes, performing the anti-shaking processing on the screen to be scanned to obtain a target screen after anti-shaking processing; performing a decoding operation on the target screen by a code scanning module of the target application to read barcode information in the target screen. Using the method of reading barcode information provided by the embodiments of the present disclosure, by obtaining attribute information of a display interface corresponding to a target application, and automatically determining whether to perform an anti-shaking processing on the screen to be scanned based on the determination of the attribute information, thereby realizing that the anti-shaking processing can be performed on the screen to be scanned in the specified scanning scene without affecting the quality of the screen in other non-scanning scenes.

### BRIEF DESCRIPTION OF THE DRAWINGS

In order to more clearly illustrate the technical solution in the embodiment of the present disclosure, the accompanying drawings that need to be used in the description of the embodiment will be briefly described below. Obviously, the drawings described below are only some embodiments of the present disclosure, and for those skilled in the art, other drawings can be obtained from them without creative effort.
FIG. 1 is a flowchart of a method of reading barcode information according to an embodiment of the present disclosure.
FIG. 2 is a flowchart of the method of reading barcode information according to another embodiment of the present disclosure.
FIG. 3 illustrate a target display interface according to an embodiment of the present disclosure.
FIG. 4 is a block diagram of a barcode information reader according to an embodiment of the present disclosure.
FIG. 5 is a block diagram of the barcode information reader according to an embodiment of the present disclosure.
FIG. 6 is a block diagram of a terminal device to an embodiment of the present disclosure.

### DETAILED DESCRIPTION OF EMBODIMENTS

The technical solution in the embodiment of the present disclosure is clearly and completely described below in conjunction with the accompanying drawings. Obviously, the described embodiments are only some embodiments of the present disclosure, not all embodiments. Based on the embodiments in the present disclosure, all other embodiments obtained by a person skilled in the art without creative labor fall within the scope of protection of the present disclosure.

It should be noted that the following is a brief introduction to the background of the present disclosure.

The present disclosure mainly focuses on how to solve the technical problem of " the barcode screen is blurred due to device shaking in the process of barcode information reading through third-party application software, which affects the reading of barcode information". It can be understood that, in current code scanning scenario, most of them first open the application software that provides the code scanning function on the electronic device, use the application software to invoke the electronic device's own camera, and then obtain the preview image through the camera, and do the barcode detection, barcode decoding and other actions, so as to obtain the barcode information. In the above scenario, due to the constraints of the code-scanning scenario, the application software providing code-scanning function can only realize simple acquisition of image data when invoking the camera of the electronic device, and lacks the authority to invoke other image processing capabilities in the electronic device that can improve the quality of the code-scanning, which results in the user not being able to quickly and effectively identify the barcode and affect the reading of the barcode information when the user is holding the electronic device and there is a jittery situation in the device.

In order to solve the above-mentioned technical problem, embodiments of the present disclosure provide a method of reading barcode information. Using the method of reading barcode information provided by the embodiments of the present disclosure, by obtaining attribute information of a display interface corresponding to a target application, and automatically determining whether to perform an anti-shaking processing on the screen to be scanned based on the determination of the attribute information, thereby realizing that the anti-shaking processing can be performed on the screen to be scanned in the specified scanning scene without affecting the quality of the screen in other non-scanning scenes.

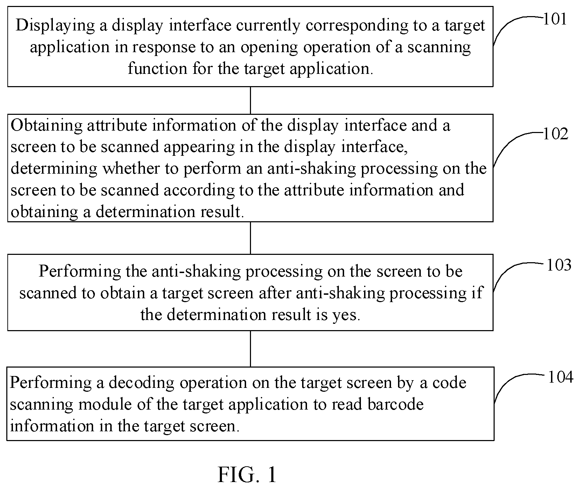

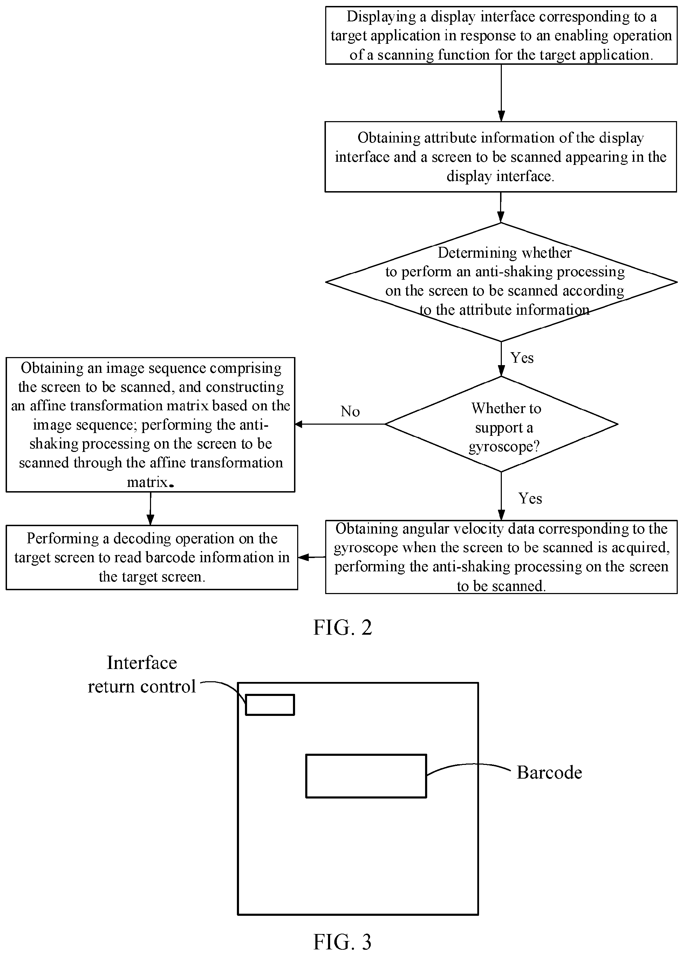

Referring to FIG. 1-FIG. 2, FIG. 1 is a flowchart of a method of reading barcode information according to an embodiment of the present disclosure. FIG. 2 is a flowchart of a method of reading barcode information according to another embodiment of the present disclosure. The method of reading barcode information described is applied in a terminal device. Optionally, the terminal device is a terminal or a server. Optionally, the server is an independent physical server, or a server cluster or distributed system comprising multiple physical servers, or a cloud server that provides cloud services, a cloud database, cloud computing, cloud functions, cloud storage, network services, cloud communications, middleware services, domain name services, security services, CDN (Content Delivery Network), and big data and artificial intelligence platforms, and other basic cloud computing services. Optionally, the terminal is a smartphone, a tablet computer, a laptop computer, a desktop computer, a smart speaker, a smart watch, a smart voice interaction device, a smart home appliance, and a vehicle-mounted terminal, but it is not limited thereto.

The described method may include the following steps:
Step 101, in response to an opening operation of a scanning function for a target application, displaying a display interface currently corresponding to the target application.

A barcode is a graphic identifier used to express a specific set of information, consisting of a series of black bars (lines) and white spaces, representing information containing numbers, letters, or other identifiers according to specific encoding rules. There are two main types of barcodes. The most common type of barcode is the one-dimensional barcode, which encodes information along a horizontal line. Common one-dimensional barcodes include Code 39, Code 128, UPC (Universal Product Code), and EAN (International Article Number). The other type is the two-dimensional barcode, which encodes information in both horizontal and vertical directions, so it is therefore capable of storing more data. It should be noted that this scheme can be applied to scenarios where various types of barcodes are scanned in order to read the barcode information, and the specific type of barcode is not limited in this scheme.

Users can hold a barcode scanner, a mobile phone, a tablet and other electronic devices with a code scanning function to align the barcode to scan the barcode. For most electronic devices, in the code scanning scenario where the scanning function according to the application is required to scan the code, the user needs to turn on the scanning function of the target application on the electronic device before the scanning end of the electronic device (e.g., the camera) can be pointed at the barcode for code scanning, and at this time, a display interface currently corresponding to the target application will be displayed on the electronic device. It should be noted that the display interface currently corresponding to the target application usually contains a screen and other preset function controls within the current visible range of the barcode scanning end.

Step 102, obtaining attribute information of the display interface and a screen to be scanned appearing in the display interface, determining whether to perform an anti-shaking processing on the screen to be scanned according to the attribute information and obtaining a determination result.

The method of reading barcode information according to this scheme is an improvement scheme proposed for the problems existing in the current code scanning scene, in which in current code scanning scenario, most of them first open the application software that provides the code scanning function on the electronic device, use the application software to invoke the electronic device's own camera, and then obtain the preview image through the camera, and do the barcode detection, barcode decoding and other actions, so as to obtain the barcode information. In the above scenario, due to the constraints of the code-scanning scenario, the application software providing code-scanning function can only realize simple acquisition of image data when invoking the camera of the electronic device, and lacks the authority to invoke other image processing capabilities in the electronic device that can improve the quality of the code-scanning, which results in the user not being able to quickly and effectively identify the barcode and affect the reading of the barcode information when the user is holding the electronic device and there is a jittery situation in the device.

To further illustrate, when the electronic device opens a conventional shooting function for shooting, in order to prevent the image screen obtained from shooting due to the instability of the user's handheld device from appearing jittery and blurred, an image anti-shaking processing function is usually added to the electronic device, and is selected to be turned on or off according to the user's needs, so as to improve the problem of blurred images obtained from shooting from the jittering of the device. However, since most of the image stabilization techniques are realized by sacrificing the image quality, the image quality of the image after the image stabilization process is usually degraded. Therefore, most image anti-shaking processing is spontaneously turned on by the user and is not turned on by default, and thus most device vendors do not open up permissions to allow the application software to actively turn on the image anti-shake processing function.

In order to realize that the anti-shaking processing can be performed on the screen to be scanned only in a specified code scanning scene, without affecting the quality of the screen in other non-scanning scenes (non-scanning scenes include, for example, invoking the device camera in an application to perform activities such as video chatting or taking pictures), in this embodiment, the anti-shaking processing can be performed by obtaining attribute information of the display interface of the target application, determining whether to perform the anti-shaking processing on the screen to be scanned based on the attribute information, and determining whether to perform the anti-shaking processing based on the attribute information. anti-shaking processing is performed, and determining whether the anti-shaking processing is performed on the screen to be scanned based on the determination result. The specific method is to determine whether a target attribute group exists in a preset list based on the target attribute group composed of the application package name and the application activity name of the target application, the preset list being used to record the attribute groups that conform to the anti-shaking processing; and if the target attribute group exists in the preset list, it is determined that it is necessary to perform the anti-shaking processing on the screen to be scanned.

For example, as shown in FIG. 3, a display interface of the "xx" application is shown, and the attribute information of the "xx" application is obtained through the hardware abstraction layer of the system in which it is obtained that the application package name of the "xx" application is "com.xx.mm" and the application activity name of which is ""com.xx.mm.plugin.scanner.ui.BaseScanUI". If the target attribute group composed of the above application package name and the application activity name exists within the preset list, then the current scene is marked as a code scanning scene, and the screen to be scanned needs to be subjected to an anti-shaking processing.

Step 103, if the determination result is yes, the anti-shaking processing is performed on the screen to be scanned to obtain a target screen after anti-shaking processing.

In this embodiment, if the determination result indicates that the anti-shaking processing of the screen to be scanned is required, the dithering data of the electronic device at the time of acquiring the screen to be scanned is obtained, and the screen to be scanned is compensated based on the dithering data, and the target screen after anti-shaking processing is obtained.

In an embodiment, if the determination result indicates that the anti-shaking processing of the screen to be scanned is required, and the current electronic device has a gyroscope, the dithering data is the angular velocity data of the corresponding gyroscope at the time when the screen to be scanned is acquired. Based on the angular velocity data, a compensation value required for each pixel point in the screen to be scanned is calculated respectively, and the compensation value is used to offset the effects of the jitter generated by the movement of the electronic device on the screen to be scanned, and based on the compensation value, the position and direction of each pixel point in the screen to be scanned is adjusted to obtain the target screen after anti-shaking processing.

The angular velocity data includes angular velocities obtained in three dimensions, namely the x-axis, the y-axis, and the z-axis. An angular velocity vector is constructed based on the angular velocities obtained in the three dimensions, a time interval required for the electronic device to acquire the screen to be scanned is determined, and a multiplication operation is performed between the angular velocity vector and the time interval, so that a compensation value required for each pixel point in the screen to be scanned can be obtained, which is used for adjusting the position and direction of each pixel point in the screen to be scanned.

In some embodiments, if the determination result indicates that the anti-shaking processing of the screen to be scanned is required and the current electronic device does not have a gyroscope, the dithering data is an affine transformation matrix constructed based on the image sequence by acquiring an image sequence containing the screen to be scanned. The affine transformation matrix is used to transform each pixel in the screen to be scanned to correct the position and shape of the image, and align the current frame image with the previous frame image to obtain the target screen after anti-dithering processing so as to reduce the dithering of the screen.

In order to obtain the affine transformation matrix, it is necessary to calculate feature vectors containing the coordinates of the feature points in each frame of the image, construct the augmentation matrix according to the feature vectors, estimate preset parameters contained in the augmentation matrix, and construct the affine transformation matrix through the preset parameters.

The preset parameters include: a scaling factor a in the horizontal direction, a tangent factor b in the horizontal direction, a shift amount c in the horizontal direction, a tangent factor d in the vertical direction, a scaling factor e in the vertical direction, and a shift amount f in the vertical direction.

Step 104, a decoding operation is performed on the target screen by a code scanning module of the target application to read barcode information in the target screen.

In this embodiment, after the screen to be scanned is processed by the system layer to do anti-shaking processing to obtain the target screen, the system layer returns the target screen to the target application, so that the target application performs operations such as color gamut conversion, barcode detection and positioning, and barcode decoding on the target screen through the code scanning module, so as to obtain the barcode information in the target screen.

In some embodiments, before determining whether to perform the anti-shaking processing on the screen to be scanned based on the attribute information, the method further comprises the following steps:
Obtaining a target ambient brightness value when the screen to be scanned is acquired; determining a target image exposure value corresponding to the target ambient brightness value according to a predetermined mapping relationship between the ambient brightness value and an image exposure value; and performing an exposure processing on the screen to be scanned according to the target exposure value.

In this embodiment, by associating the image exposure value with the ambient brightness value of the shooting scene in a code scanning scene where the image screen quality can be ignored, the code scanning process only needs to focus on the ambient light factor without focusing on the image quality so as to increase the reading speed of the barcode information.

All of the above-mentioned optional technical solutions may be arbitrarily combined to form optional embodiments of the present disclosure, and will not be repeated herein.

In specific embodiments, the present disclosure is not limited by the order of execution of the various steps described, and certain steps may also be performed in other orders or performed at the same time without creating conflicts.

In an embodiment of the present disclosure, the method includes: displaying a display interface corresponding to a target application in response to an enabling operation of a scanning function for the target application; obtaining attribute information of the display interface and a screen to be scanned appearing in the display interface, determining whether to perform an anti-shaking processing on the screen to be scanned according to the attribute information and obtaining a determination result; when the determination result is yes, performing the anti-shaking processing on the screen to be scanned to obtain a target screen after anti-shaking processing; performing a decoding operation on the target screen by a code scanning module of the target application to read barcode information in the target screen. Using the method of reading barcode information provided by the embodiments of the present disclosure, by obtaining attribute information of a display interface corresponding to a target application, and automatically determining whether to perform an anti-shaking processing on the screen to be scanned based on the determination of the attribute information, thereby realizing that the anti-shaking processing can be performed on the screen to be scanned in the specified scanning scene without affecting the quality of the screen in other non-scanning scenes.

Embodiments of the present disclosure also provide a barcode information reading apparatus, and the barcode information reading apparatus can be integrated in the terminal device.

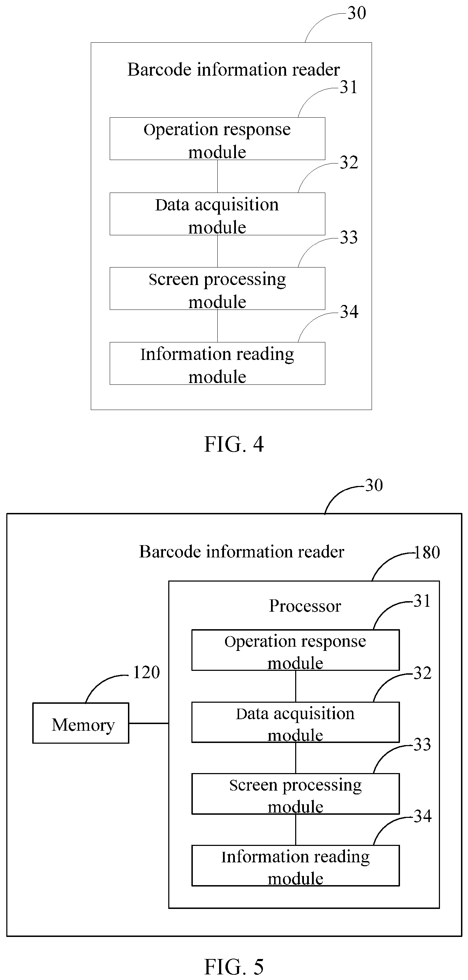

Refer to FIG. 4, FIG. 4 is a block diagram of a barcode information reader according to the embodiment of the present disclosure. The barcode information reader 30 includes an operation response module 31, a data acquisition module 32, a screen processing module 33, and an information reading module 34.

The operation response module 31 is used for displaying a display interface currently corresponding to a target application in response to an opening operation of a scanning function for the target application.

The data acquisition module 32 is used for obtaining attribute information of the display interface and a screen to be scanned appearing in the display interface, determining whether to perform an anti-shaking processing on the screen to be scanned according to the attribute information and obtaining a determination result.

The screen processing module 33 is used for performing the anti-shaking processing on the screen to be scanned to obtain a target screen after anti-shaking processing if it is determined that the anti-shaking processing on the screen to be scanned.

The information reading module 34 is used for performing a decoding operation on the target screen by a code scanning module of the target application to read barcode information in the target screen.

In some embodiments, the attribute information comprises an application package name and an application activity name of the target application. The data acquisition module 33 is further configured to: based on a target attribute group composed of the application package name and the application activity name of the target application, determine whether the target attribute group exists in a preset list, wherein the preset list is used for recording the attribute groups that conform to the anti-shaking processing; determine that the screen to be scanned needs to be subjected to anti-shaking processing when the target attribute group exists in the preset list.

In some embodiments, the screen processing module 33 is further configured to obtain angular velocity data corresponding to a gyroscope when the screen to be scanned is acquired; to calculate a compensation value required for each pixel point in the screen to be scanned respectively based on the angular velocity data, where compensation value being used to counteract the effect of jittering of the screen to be scanned due to movement of an electronic device; and to adjust the position and direction of each pixel point in the screen to be scanned based on the compensation value to obtain the target screen after anti-shaking processing.

In some embodiments, the angular velocity data comprises angular velocities obtained in three dimensions. The screen processing module 33 is further configured to construct an angular velocity vector according to the angular velocities obtained in three dimensions; to determine a time interval required for the electronic device to acquire the screen to be scanned; and to perform a multiplication operation between the angular velocity vector and the time interval to obtain the compensation value required for each pixel point in the screen to be scanned.

In some embodiments, the screen processing module 33 is further configured to obtain an image sequence comprising the screen to be scanned, and construct an affine transformation matrix based on the image sequence; and to adjust the position and direction of each pixel point in the screen to be scanned through the affine transformation matrix to obtain the target screen after anti-shaking processing.

In some embodiments, the screen processing module 33 is further configured to calculate feature vector containing the coordinates of the feature point in each frame of the image, and constructing an augmentation matrix based on the feature vector; and to estimate predetermined parameters contained in the augmentation matrix, and construct the affine transformation matrix by the predetermined parameters.

In some embodiments, the barcode information reader further includes a pre-processing module configured to obtain a target ambient brightness value when the screen to be scanned is acquired; and to determine a target image exposure value corresponding to the target ambient brightness value according to a predetermined mapping relationship between the ambient brightness value and an image exposure value; and to perform an exposure processing on the screen to be scanned according to the target image exposure value.

In specific implementation, each of the above modules can be implemented as an independent entity, or it can be arbitrarily combined and implemented as the same or several entities.

It can be seen from the above that the barcode information reader 30 provided in the embodiment of the present disclosure, the operation response module 31 is arranged for displaying a display interface corresponding to a target application in response to an opening operation of a scanning function for the target application; the data acquisition module 31 is arranged for obtaining attribute information of the display interface and a screen to be scanned appearing in the display interface, determining whether to perform an anti-shaking processing on the screen to be scanned according to the attribute information and obtaining a determination result; the screen processing module 33 is arranged for performing the anti-shaking processing on the screen to be scanned to obtain a target screen after anti-shaking processing if the determination result is yes; and the information reading module 34 is arranged for performing a decoding operation on the target screen by a code scanning module of the target application to read barcode information in the target screen.

Referring to FIG. 5, which is a schematic diagram of another structure of a barcode information reading apparatus according to an embodiment of the present disclosure. The barcode information reader 30 comprises a memory 120, one or more processors 180, and one or more applications. The one or more applications stored in the memory 120 can be executed by the processor 180. The processor 180 may include an operation response module 31, a data acquisition module 32, a screen processing module 33, and an information reading module 34.

The memory 120 can be used to store applications and data. The memory 120 stores executable code in the application. Applications can be composed of various functional modules. The processor 180 runs various functional applications as well as data processing by running applications stored in memory 120. In addition, the memory 120 may include high-speed random access memory and may also include non-volatile memory, such as at least one disk storage device, flash memory device, or other volatile solid-state memory device. Correspondingly, the processor 180 may access to the memory 120 through a memory controller installed in the memory 120.

The processor 180 serving as the control center of the device utilizes various interfaces and lines to connect the various parts of the whole terminal, and performs various functions and processes data of the device by running or executing the application stored in the memory 120, and calling the data stored in the memory 120. Optionally, the processor 180 may include one or more processing cores. Preferably, the processor 180 can integrate an application processor and a modem processor. The application processor mainly processes the operating system, user interface, and application applications.

Specifically, in this embodiment, the processor 180 will load executable codes corresponding to the process of one or more applications into the memory 120 in accordance with the following instructions, and the processor 180 will run the application stored in the memory 120 to realize various functions:
Operation response instructions for displaying a display interface currently corresponding to a target application in response to an opening operation of a scanning function for the target application;
Data acquisition instructions for obtaining attribute information of the display interface and a screen to be scanned appearing in the display interface, determining whether to perform an anti-shaking processing on the screen to be scanned according to the attribute information and obtaining a determination result;
Screen processing instructions for performing the anti-shaking processing on the screen to be scanned if the determination result is yes to obtain a target screen after anti-shaking processing; and
Information reading instructions for performing a decoding operation on the target screen by a code scanning module of the target application to read barcode information in the target screen.

In some embodiments, the attribute information comprises an application package name and an application activity name of the target application. The data acquisition instructions are further configured to: based on a target attribute group composed of the application package name and the application activity name of the target application, determine whether the target attribute group exists in a preset list, wherein the preset list is used for recording the attribute groups that conform to the anti-shaking processing; determine that the screen to be scanned needs to be subjected to anti-shaking processing when the target attribute group exists in the preset list.

In some embodiments, the screen processing instructions are further configured to obtain angular velocity data corresponding to a gyroscope when the screen to be scanned is acquired; to calculate a compensation value required for each pixel point in the screen to be scanned respectively based on the angular velocity data, where compensation value being used to counteract the effect of jittering of the screen to be scanned due to movement of an electronic device; and to adjust the position and direction of each pixel point in the screen to be scanned based on the compensation value to obtain the target screen after anti-shaking processing.

In some embodiments, the angular velocity data comprises angular velocities obtained in three dimensions. The screen processing instructions are further configured to construct an angular velocity vector according to the angular velocities obtained in three dimensions; to determine a time interval required for the electronic device to acquire the screen to be scanned; and to perform a multiplication operation between the angular velocity vector and the time interval to obtain the compensation value required for each pixel point in the screen to be scanned.

In some embodiments, the screen processing instructions are further configured to obtain an image sequence comprising the screen to be scanned, and construct an affine transformation matrix based on the image sequence; and to adjust the position and direction of each pixel point in the screen to be scanned through the affine transformation matrix to obtain the target screen after anti-shaking processing.

In some embodiments, the screen processing instructions are further configured to calculate feature vector containing the coordinates of the feature point in each frame of the image, and constructing an augmentation matrix based on the feature vector; and to estimate predetermined parameters contained in the augmentation matrix, and construct the affine transformation matrix by the predetermined parameters.

In some embodiments, the instructions are further includes pre-processing instructions configured to obtain a target ambient brightness value when the screen to be scanned is acquired; and to determine a target image exposure value corresponding to the target ambient brightness value according to a predetermined mapping relationship between the ambient brightness value and an image exposure value; and to perform an exposure processing on the screen to be scanned according to the target image exposure value.

Embodiments of the present disclosure also provide a terminal device. The terminal device can be a server, a smart phone, a computer, a tablet computer and other device.

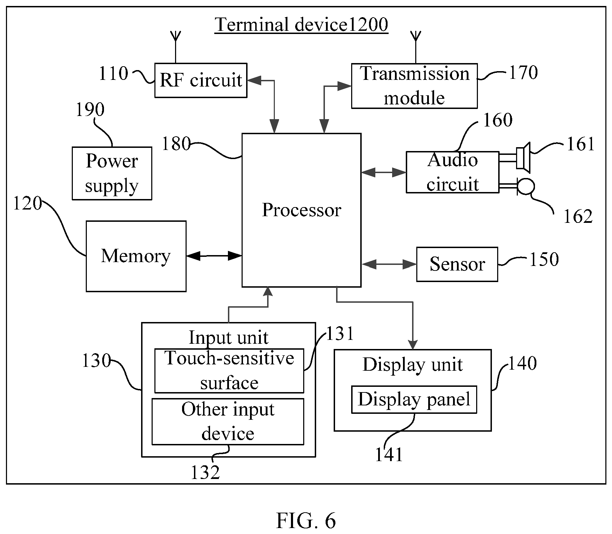

Referring to FIG. 6 illustrating a block diagram of a terminal device according to an embodiment of the present disclosure, the terminal device can be used to implement the method of reading barcode information provided in the above embodiments. The terminal device 1200 can be a television or a smartphone or a tablet.

As shown in FIG. 6, the terminal device 1200 may include a radio frequency (RF) circuit 110, one or more memory 120 (only one is shown in FIG. 6) as a computer-readable storage medium, an input unit 130, a display unit 140, a sensor 150, an audio circuit 160, a transmission module 170, one or more processor 180 (only one is shown in FIG. 6) processing cores, a power supply 190, and other components. It will be appreciated by those skilled in the art that the structure of the terminal device 1200 illustrated in FIG. 6 does not constitute a limitation of the terminal device 1200, and may include more or fewer components than illustrated, or a combination of certain components, or a different arrangement of components.

The RF circuit 110 is used for receiving and transmitting electromagnetic waves, realizing the mutual conversion of electromagnetic waves and electrical signals, thereby communicating with communication networks or other equipment. The RF circuit 110 may include a variety of existing circuit elements used to perform these functions, such as antennas, RF transceivers, digital signal processors, encryption/decryption chips, user identity module (SIM) cards, memory, and so on. The RF circuit 110 can communicate with various networks such as the Internet, enterprise intranet, wireless network, or communicate with other devices through wireless networks.

The memory 120 can be used to store software programs and modules, such as the program instruction/module corresponding to the barcode information reading method in the above-mentioned embodiment, the processor 180 performs various functional applications and data processing by running the software program and module stored in the memory 120, and can automatically select the vibration reminder mode to carry out barcode information reading according to the current scene that the terminal equipment is in, can not only guarantee that the scene such as the conference is not disturbed, but also can guarantee that the user can perceive the incoming call, The intelligence of terminal devices has been improved. The memory 120 may include high-speed random access memory and may also include non-volatile memory such as one or more magnetic memory devices, flash memory, or other non-volatile memory. In some instances, the memory 120 may further include memory that is set remotely with respect to the processor 180, which can be connected to the end device 1200 via a network. Examples of the above networks include, but are not limited to, the Internet, intranets, local area networks, mobile communication networks, and combinations thereof.

The input unit 130 can be used for receiving input numeric or character information, and generating keyboard, mouse, joystick, optical or trackball signal input related to user settings and function control. Specifically, the input unit 130 may include a touch-sensitive surface 131 and other input devices 132. The touch-sensitive surface 131, also known as a touch-sensitive display or touchpad, collects the user's touch actions on or near it (e.g., the user's operation on or near the touch-sensitive surface 131 with any suitable object or accessory such as a finger, stylus, etc.), and drives the corresponding connection device according to a pre-programmed program. Optionally, the touch-sensitive surface 131 may comprise two parts: a touch detection device and a touch controller. Wherein, the touch detection device detects the user's touch orientation, detects the signal brought by the touch operation, and transmits the signal to the touch controller; The touch controller receives touch information from the touch detection device, converts it into contact coordinates, and then sends it to the processor 180, and can receive the command sent by the processor 180 and executes it. In addition, touch-sensitive surfaces can be achieved in a variety of types, including resistive, capacitive, infrared, and surface acoustic waves131. In addition to the touch-sensitive surface 131, the input unit 130 may also include other input devices 132. Specifically, other input devices132 may include, but are not limited to, one or more of physical keyboards, function keys (such as volume control buttons, switch buttons, etc.), trackballs, mice, joysticks, etc.

The display unit 140 can be used for displaying various graphical user interfaces of information input by the user or provided to the user and the terminal device 1200, and these graphical user interfaces can be made up of graphics, text, icons, videos and any combination thereof. The display unit 140 may comprise a display panel 141, and optionally, the display panel 141 can be a Liquid Crystal Display (LCD) panel or an Organic Light-Emitting Diode (OLED) panel. Furthermore, the touch-sensitive surface 131 can cover the display panel 141. When the touch-sensitive surface 131 detects a touch operation on or near it, it is transmitted to the processor 180 to determine the type of touch event, and then the processor 180 provides corresponding visual output on the display panel 141 according to the type of touch event. Although in FIG. 6, the touch-sensitive surface 131 and the display panel 141 are two independent components to realize the input and output functions, in some embodiments, the touch-sensitive surface 131 and the display panel 141 can be integrated to realize the input and output functions.

The terminal device 1200 may also include at least one sensor 150, such as a light sensor, a motion sensor, and other sensors. Specifically, the light sensor may include an ambient light sensor and a proximity sensor, wherein the ambient light sensor can adjust the brightness of the display panel 141 according to the brightness and darkness of the ambient light, and the proximity sensor can turn off the display panel 141 and/or the backlight when the terminal device 1200 moves to the ear. As a kind of motion sensor, the gravitational acceleration sensor can detect the magnitude of acceleration in all directions (generally three axes), and can detect the magnitude and direction of gravity when stationary, which can be used to identify the application of mobile phone attitude (such as horizontal and vertical screen switching, related games, magnetometer attitude calibration), vibration recognition related functions (such as pedometer, tapping), etc.; As for the gyroscope, barometer, hygrometer, thermometer, infrared sensor and other sensors that can also be configured with the terminal device 1200, they will not be repeated here.

The audio circuit 160, the speaker 161 and the microphone 162 can provide an audio interface between the user and the terminal device 1200. The audio circuit 160 can transmit the electrical signal converted by the received audio data to the speaker 161, and the speaker 161 converts it into a sound signal output; On the other hand, the microphone 162 converts the collected sound signal into an electrical signal, is converted into audio data after being received by the audio circuit 160, and then the audio data output processor 180 is processed, and is sent to another terminal such as another terminal through the RF circuit 110, or the audio data is output to the memory 120 for further processing. The audio circuit 160 may also include an earbud jack to provide communication between the peripheral headset and the terminal device 1200.

The terminal device 1200 can help users send and receive e-mails, browse web pages and access streaming media through transmission modules 170 (such as Wi-Fi modules), and it provides users with wireless broadband Internet access. Although the transmission module 170 is shown in FIG. 6, it is understandable that it does not belong to the mandatory composition of the terminal device 1200 and can be omitted as necessary to the extent that it does not change the essence of the invention.

The processor 180 is the control center of the terminal device 1200, utilizes various interfaces and lines to connect various parts of the whole mobile phone, performs various functions of the terminal device 1200 and processes data by running or executing software programs and/or modules stored in the memory 120, and calling the data stored in the memory 120, so as to carry out overall monitoring of the mobile phone. Optionally, the processor 180 may include one or more processing cores. In some embodiments, the processor 180 can integrate an application processor and a modem processor, wherein the application processor mainly processes the operating system, the user interface and the application and the like, and the modem processor mainly processes wireless communication. Understandably, the modem processor can also be independent from the processor 180.

The terminal device 1200 also comprises a power supply 190 supplying power to each component. In some embodiments, the power supply 190 can be logically connected with the processor 180 through a power management system, so that functions such as managing discharge and power consumption management are realized through the power management system. The power supply 190 can also include any component such as one or more DC or AC power sources, recharging systems, power fault detection circuits, power converters or inverters, power status indicators, etc.

Although not shown, the terminal device 1200 may also include a camera (e.g., a front camera, a rear camera), a Bluetooth module, and the like, which will not be described herein. The display unit 140 of the terminal device 1200 is a touch screen display. the terminal device 1200 further comprises a memory 120 and one or more instructions stored in the memory 120. The one or more processors 180 execute the one or more instructions to perform the following instructions:
Operation response instructions for displaying a display interface currently corresponding to a target application in response to an opening operation of a scanning function for the target application;
Data acquisition instructions for obtaining attribute information of the display interface and a screen to be scanned appearing in the display interface, determining whether to perform an anti-shaking processing on the screen to be scanned according to the attribute information and obtaining a determination result;
Screen processing instructions for performing the anti-shaking processing on the screen to be scanned if the determination result is yes to obtain a target screen after anti-shaking processing;
Information reading instructions for performing a decoding operation on the target screen by a code scanning module of the target application to read barcode information in the target screen.

In some embodiments, the attribute information comprises an application package name and an application activity name of the target application. The data acquisition instructions are further configured to: based on a target attribute group composed of the application package name and the application activity name of the target application, determine whether the target attribute group exists in a preset list, wherein the preset list is used for recording the attribute groups that conform to the anti-shaking processing; determine that the screen to be scanned needs to be subjected to anti-shaking processing when the target attribute group exists in the preset list.

In some embodiments, the screen processing instructions are further configured to obtain angular velocity data corresponding to a gyroscope when the screen to be scanned is acquired; to calculate a compensation value required for each pixel point in the screen to be scanned respectively based on the angular velocity data, where compensation value being used to counteract the effect of jittering of the screen to be scanned due to movement of an electronic device; and to adjust the position and direction of each pixel point in the screen to be scanned based on the compensation value to obtain the target screen after anti-shaking processing.

In some embodiments, the angular velocity data comprises angular velocities obtained in three dimensions. The screen processing instructions are further configured to construct an angular velocity vector according to the angular velocities obtained in three dimensions; to determine a time interval required for the electronic device to acquire the screen to be scanned; and to perform a multiplication operation between the angular velocity vector and the time interval to obtain the compensation value required for each pixel point in the screen to be scanned.

In some embodiments, the screen processing instructions are further configured to obtain an image sequence comprising the screen to be scanned, and construct an affine transformation matrix based on the image sequence; and to adjust the position and direction of each pixel point in the screen to be scanned through the affine transformation matrix to obtain the target screen after anti-shaking processing.

In some embodiments, the screen processing instructions are further configured to calculate feature vector containing the coordinates of the feature point in each frame of the image, and constructing an augmentation matrix based on the feature vector; and to estimate predetermined parameters contained in the augmentation matrix, and construct the affine transformation matrix by the predetermined parameters.

In some embodiments, the instructions are further includes pre-processing instructions configured to obtain a target ambient brightness value when the screen to be scanned is acquired; and to determine a target image exposure value corresponding to the target ambient brightness value according to a predetermined mapping relationship between the ambient brightness value and an image exposure value; and to perform an exposure processing on the screen to be scanned according to the target image exposure value.

An embodiment of the present disclosure also provides a terminal device. The terminal device may be a smart phone, a computer and the like.

From the above, it can be seen that the embodiment of the present disclosure provides a terminal device 1200. The terminal device 1200 performs the following operations:
displaying a display interface corresponding to a target application in response to an enabling operation of a scanning function for the target application;
obtaining attribute information of the display interface and a screen to be scanned appearing in the display interface, determining whether to perform an anti-shaking processing on the screen to be scanned according to the attribute information and obtaining a determination result;
when the determination result is yes, performing the anti-shaking processing on the screen to be scanned to obtain a target screen after anti-shaking processing; and
performing a decoding operation on the target screen by a code scanning module of the target application to read barcode information in the target screen.

Embodiments of the present disclosure also provides a computer-readable storage medium. The computer-readable storage medium stores a plurality of instructions executable by a processor to perform the method of reading barcode information as stated in the above embodiments.

It should be noted that, for the method of reading barcode information of the present disclosure, a person having ordinary skill in the art can understand that all or part of the process of realizing the method of reading barcode information of the present disclosure can be completed by controlling the relevant hardware through computer program. The computer program can be stored in a computer-readable storage medium, e.g. the memory of a terminal device, and be executed by at least one processor in the terminal device. In the process of execution, the process of the method of reading barcode information may be included. The storage medium may be a diskette, an optical disc, a read-only memory (ROM), a random access memory (RAM), and the like.

For the barcode information reader of the embodiment of the present disclosure, each functional module thereof may be integrated in a processing chip, or each module may exist separately, or two or more modules may be integrated in a module. The above-mentioned integrated modules can be implemented in the form of either hardware or software function modules. When the integrated module is realized in the form of a software function module and is sold or used as an independent product, it can also be stored in a computer-readable storage medium, and the storage medium is such as a read-only memory, a disk or an optical disc.

The method of reading barcode information, a reader, a storage medium and a terminal device according to embodiments of the present disclosure are described in detail above. In the present disclosure, the principles and embodiments of the present disclosure are expounded by applying specific examples, and the descriptions of the above embodiments are only used to help understand the methods and core ideas of the present disclosure. At the same time, for those skilled in the art, there will be changes in the specific embodiment and scope of application according to the idea of the present disclosure, and in summary, the contents of this specification should not be construed as a restriction on the present disclosure.

## Claims

1. A method of reading barcode information applied to an electronic device, comprising:
displaying a display interface corresponding to a target application in response to an enabling operation of a scanning function for the target application;
obtaining attribute information of the display interface and a screen to be scanned appearing in the display interface, determining whether to perform an anti-shaking processing on the screen to be scanned according to the attribute information and obtaining a determination result;
when the determination result is yes, performing the anti-shaking processing on the screen to be scanned to obtain a target screen after anti-shaking processing; and
performing a decoding operation on the target screen by a code scanning module of the target application to read barcode information in the target screen.

2. The method of claim 1, wherein the attribute information comprises an application package name and an application activity name of the target application.

3. The method of claim 2, wherein the determining whether to perform an anti-shaking processing on the screen to be scanned according to the attribute information, comprises:
based on a target attribute group composed of the application package name and the application activity name of the target application, determining whether the target attribute group exists in a preset list, wherein the preset list is used for recording the attribute groups that conform to the anti-shaking processing;
when the target attribute group exists in the preset list, determining that the screen to be scanned needs to be subjected to anti-shaking processing.

4. The method of claim 1, wherein the electronic device comprises a gyroscope, and the performing the anti-shaking processing on the screen to be scanned to obtain a target screen after anti-shaking processing comprises:
obtaining angular velocity data corresponding to the gyroscope when the screen to be scanned is acquired;
calculating a compensation value required for each pixel point in the screen to be scanned respectively based on the angular velocity data, the compensation value being used to counteract the effect of jittering of the screen to be scanned due to movement of an electronic device; and
adjusting the position and direction of each pixel point in the screen to be scanned based on the compensation value to obtain the target screen after anti-shaking processing.

5. The method of claim 4, wherein the angular velocity data comprises angular velocities obtained in three dimensions.

6. The method of claim 5, wherein the calculating the compensation value required for each pixel point in the screen to be scanned respectively based on the angular velocity data comprises:
constructing an angular velocity vector according to the angular velocities obtained in three dimensions;
determining a time interval required for the electronic device to acquire the screen to be scanned; and
performing a multiplication operation between the angular velocity vector and the time interval to obtain the compensation value required for each pixel point in the screen to be scanned.

7. The method of claim 6, wherein the three dimensions are x-axis, y-axis and z-axis.

8. The method of claim 1, wherein the performing the anti-shaking processing on the screen to be scanned to obtain the target screen after anti-shaking processing, comprises:
obtaining an image sequence comprising the screen to be scanned, and constructing an affine transformation matrix based on the image sequence; and
adjusting the position and direction of each pixel point in the screen to be scanned through the affine transformation matrix to obtain the target screen after anti-shaking processing.

9. The method of claim 8, wherein the constructing the affine transformation matrix based on the image sequence comprises:
calculating feature vector containing the coordinates of the feature point in each frame of the image, and constructing an augmentation matrix based on the feature vector; and
estimating predetermined parameters contained in the augmentation matrix, and constructing the affine transformation matrix by the predetermined parameters.

10. The method of claim 9, wherein the predetermined parameters comprise: a scaling factor a in a horizontal direction, a tangent factor b in a horizontal direction, a shift amount c in the horizontal direction, a tangent factor d in the vertical direction, a scaling factor e in the vertical direction, and a shift amount f in the vertical direction.

11. The method of claim 1, wherein before determining whether to perform the anti-shaking processing on the screen to be scanned according to the attribute information, the method further comprises:
obtaining a target ambient brightness value when the screen to be scanned is acquired;
determining a target image exposure value corresponding to the target ambient brightness value according to a predetermined mapping relationship between the ambient brightness value and an image exposure value; and
performing an exposure processing on the screen to be scanned according to the target image exposure value.

12. A barcode information reader, comprising:
an operation response module, configured to display a display interface currently corresponding to a target application in response to an enabling operation of a scanning function for the target application;
a data acquisition module, configured to obtain attribute information of the display interface and a screen to be scanned appearing in the display interface, to determine whether to perform an anti-shaking processing on the screen to be scanned according to the attribute information, and to obtain a determination result;
a screen processing module, configured to perform the anti-shaking processing on the screen to be scanned to obtain a target screen after anti-shaking processing when the determination result is yes; and
an information reading module, configured to perform a decoding operation on the target screen by a code scanning module of the target application to read barcode information in the target screen.

13. The barcode information reader of claim 12, wherein the attribute information comprises an application package name and an application activity name of the target application.

14. The barcode information reader of claim 13, wherein the data acquisition module is further configured to: based on a target attribute group composed of the application package name and the application activity name of the target application, determine whether the target attribute group exists in a preset list, wherein the preset list is used for recording the attribute groups that conform to the anti-shaking processing; and
determine that the screen to be scanned needs to be subjected to anti-shaking processing when the target attribute group exists in the preset list.

15. The barcode information reader of claim 12, wherein the screen processing module is further configured to obtain angular velocity data corresponding to a gyroscope when the screen to be scanned is acquired; to calculate a compensation value required for each pixel point in the screen to be scanned respectively based on the angular velocity data, where compensation value being used to counteract the effect of jittering of the screen to be scanned due to movement of an electronic device; and to adjust the position and direction of each pixel point in the screen to be scanned based on the compensation value to obtain the target screen after anti-shaking processing.

16. The barcode information reader of claim 15, wherein the angular velocity data comprises angular velocities obtained in three dimensions.

17. The barcode information reader of claim 16, wherein the screen processing module is further configured to construct an angular velocity vector according to the angular velocities obtained in three dimensions; to determine a time interval required for the electronic device to acquire the screen to be scanned; and to perform a multiplication operation between the angular velocity vector and the time interval to obtain the compensation value required for each pixel point in the screen to be scanned.

18. The barcode information reader of claim 17, wherein the three dimensions are x-axis, y-axis and z-axis.

19. A computer-readable storage medium, wherein the computer-readable storage medium stores a plurality of instructions executable by a processor to perform the method as claimed in any one of claims 1-11.

20. A terminal device, comprising a processor and a memory storing a plurality of instructions executable by the processor to perform the method as claimed in any one of claims 1-11.
